# EUROPÄISCHE PATENTSCHRIFT

(11) **EP 2 746 883 B1**
(45) Veröffentlichungstag und Bekanntmachung des Hinweises auf die Patenterteilung: **27.04.2016**
(21) Anmeldenummer: 12197668.2
(22) Anmeldetag: 18.12.2012
(51) Int. Cl.: G05B 23/02

(54) **Verfahren und Server zur Generierung einer Anzeige- und Bedienansicht für ein Bedien- und Beobachtungsgerät einer industriellen Automatisierungsanordnung**
Method and server for generating a display and control display for an operating and observation device of an industrial automation assembly
Procédé et serveur de génération d'une projection de commande et d'affichage pour un appareil d'observation et de commande d'un agencement d'automatisation industriel

(43) Veröffentlichungstag der Anmeldung: 25.06.2014
(73) Patentinhaber: Siemens Aktiengesellschaft, 80333 München (DE)
(72) Erfinder: Becker, Norbert, 91058 Erlangen (DE); Frössler, Frank, Dr., 80469 München (DE); Lepratti, Raffaello, Dr., 10117 Berlin (DE); Ritschel, Stefan, 92272 Freudenberg (DE); Rougoor, Jan, 76344 Eggenstein-Leopoldshafen (DE); Schindler, Josef, 90489 Nürnberg (DE)

(56) Entgegenhaltungen:
- EP-A1- 1 195 664
- WO-A1-2012/051726
- DE-A1-102005 030 361
- DE-U1-202012 009 024

## Beschreibung

Die Erfindung betrifft ein Verfahren zur Generierung einer Anzeige- und Bedienansicht für ein Bedien- und Beobachtungsgerät einer industriellen Automatisierungsanordnung gemäß dem Oberbegriff des Patentanspruchs 1, und einen Server zur Generierung einer Anzeige- und Bedienansicht für ein Bedien- und Beobachtungsgerät einer industriellen Automatisierungsanordnung gemäß dem Oberbegriff des Patentanspruchs 9.

Industrielle Automatisierungsanordnungen bestehen regelmäßig aus einer Vielzahl von Komponenten, beispielsweise Mikroprozessorgesteuerte Steuerungen (PLC - Programmable Logic Controller), Sensoren, Aktoren etc. Die mikroprozessorgesteuerten Steuerungen sind dabei üblicher Weise mittels eines Datennetzwerks (Automatisierungsnetzwerk) miteinander verbunden, beispielsweise über ein ProfiNet-, ProfiBus-, Industrial Ethernet- oder ähnliches Netzwerk. An dem Automatisierungsnetzwerk können üblicher Weise auch Bedien- und Beobachtungsgeräte angeschlossen sein oder fallweise angeschlossen werden, wobei diese Geräte dem Bedienpersonal oder einem Wartungstechniker mittels einer graphischen Benutzeroberfläche Informationen über die Zustände des gesteuerten Prozesses oder der gesteuerten Automatisierungsaufgabe angeben und Bedienelemente anbieten, mit denen das System gesteuert werden kann bzw. Anweisungen, Parameter und dgl. eingegeben werden können. Solche Bedien- und Beobachtungsgeräte, oft auch als HMI-Geräte bezeichnet (HMI = Human Machine Interface), können sowohl fest installiert an verschiedenen Arbeitsstationen einer Automatisierungsanordnung bereit stehen, als auch als mobile Geräte, oft sogar drahtlos betrieben, von einem Bediener mitgeführt werden oder fallweise an bestimmten Geräten oder Netzwerkanschlüssen ("Ports") der Automatisierungsanordnung "angesteckt" werden.

Die industriellen Automatisierungsanordnungen werden üblicher Weise mittels eines sog. "Engineering-Systems" projektiert und programmiert, was bedeutet, dass sowohl die Anordnung und (elektrische) Verschaltung der Komponenten (Projektierung) als auch die Erstellung der Software für die mikroprozessorgesteuerten Komponenten (Programmierung) mittels des Engineering-Systems und der darin vorhandenen Programme (Tools) durchgeführt werden. Neben der Programmierung der mikroprozessorgesteuerten Komponenten (PLCs) werden im Züge der Projektierung bzw. Programmierung auch Programme für die Bedien- und Beobachtungsgeräte erstellt. Dabei werden insbesondere die graphischen Benutzeroberflächen ("Screens") der Bedien- und Beobachtungsgeräte definiert. Dies bedeutet, dass für jedes dieser Geräte und in manchen Ausführungsformen auch getrennt für unterschiedliche Benutzer (Bedienpersonal, Wartungspersonal, Anwendungsspezialisten, Qualitätssicherung etc.) bestimmte Ansichten ("Screens") bereitgestellt werden, die jeweils symbolisch eine Anzahl von Komponenten, deren Beziehungen miteinander und deren Zustände darstellen. Diese "Screens" umfassen üblicher Weise auch Bedienelemente (z.B. Buttons, Eingabefelder etc.) zur Bedienung oder Beeinflussung der Komponenten bzw. des automatisierten Prozesses. Bei Bedarf kann ein Bediener oder ein Benutzer eines Bedien- und Beobachtungsgerätes einen der vorbereiteten "Screens" aufrufen und sich so die gewünschten Informationen beschaffen bzw. die gewünschten Eingaben tätigen. Die "Screens" sollen im Folgenden allgemein auch als "Anzeige- und Bedienansichten" bezeichnet werden.

Die Druckschrift WO 2012 / 051726 A1 - Groth "Produktweiterverarbeitungsanlage" zeigt eine industrielle Anordnung mit abgesetzten Bedien- und Beobachtungsgeräten. Die Benutzeroberfläche der Bedien- und Beobachtungsgeräte kann abhängig com angemeldeten Benutzer oder dessen Benutzerprofil unterschiedliche Darstellungen aufweisen.

Auch die Druckschrift DE 20 2012 009 024 U1 "Steuereinrichtung für Geräte mit einem grafischen Display" zeigt nutzabhängige Darstellungen auf einer Benutzeroberfläche.

Die Veröffentlichung EP 1 195 664 A1 - Müller et a1. "Service-System mit Optimierung" zeigt ebenfalls eine abgesetzte Bedien- und Beobachtungseinrichtung, an der sich ein Benutzer authentifizieren soll, wobei auch hier unterschiedliche Benutzerrollen für eine personifizierte Darstellung beschrieben sind.

Schließlich zeigt auch die Offenlegungsschrift DE 10 2005 030 361 A1 - Donk et al. "Bedieneinrichtung zur individuellen Bedienung eines Kraftfahrzeuggerätes" benutzerspezifische Bedienmenüs für eine Bedien- und Beobachtungseinrichtung.

An einer Maschine oder einer Produktionsanlage wird während des Engineerings für jedes Bedien- und Beobachtungsgerät ein entsprechendes "HMI-Projekt" der Automatisierungsanordnung erstellt, um die benötigten Informationen und Bedienelemente in Form sog. "GUI-Objekte" (GUI = Graphical User Interface) für die verschiedenen Benutzer zur Verfügung zu stellen. Dieses "HMI-Projekt" ist hierbei statisch, was bedeutet, dass schon im Vorfeld bedacht werden muss, welche Produktionsereignisse auftreten können und für welche Benutzer bzw. Benutzerrollen in welcher Form auf diese Ereignisse entsprechend reagiert werden soll. Im Laufenden Betrieb muss ein Bediener dann ein der Anlage oder Maschine zugeordnetes "HMI-Projekt" starten, um Zugriff auf die für ihn bzw. seine Funktion ("Rolle") vorbereiten "Screens" zu erhalten.

Nachteilig daran ist, dass bei Änderungen an der Struktur der industriellen Automatisierungsanordnung regelmäßig auch das "HMI-Projekt" geändert werden muss, um die darin vorbereiteten "Screens" an die geänderten Gegebenheiten anzupassen.

Es ist also eine Aufgabe der vorliegenden Erfindung, die Erstellung und Aktualisierung von Anzeige- und Bedienansichten ("Screens") von Bedien- und Beobachtungsgeräten für industrielle Automatisierungsanordnungen zu verbessern und zu vereinfachen.

Es ist eine Kernidee der erfindungsgemäßen Lösung dieser Aufgabe, dass anstelle oder zusätzlich zu der "Vorab-Erstellung" der "statischen" Anzeige- und Bedienansichten diese ereignisorientiert sowie Kontext- und Rollenbezogen dynamisch generiert und auf Bedien- und Beobachtungsgeräten (HMI-Geräten) visualisiert werden. Dazu ist erfindungsgemäß vorgesehen, eine sog. "Instanz" (Server, Prozedur, Gerät, o.ä.) zur Auswertung von ereignisgesteuerten Anfragen aus dem laufenden Betrieb heraus vorzusehen, wobei diese Kontext-basierend, also bezogen auf die Art des auslösenden Ereignisses, den jeweiligen Anlagenzustand, den Zustand der laufenden Produktion bzw. des laufenden Prozesses und bezogen auf das Gerät, welches das Ereignis ausgelöst hat, ausgewertet werden und notwendige Inhalte aus einer zentralen Engineering-Datenbank Bedienerrollenspezifisch zusammengestellt werden sollen.

Die Aufgabe wird insbesondere durch ein Verfahren gemäß dem Patentanspruch 1 gelöst, wobei ein Verfahren zur Generierung einer Anzeige- und Bedienansicht für ein Bedien- und Beobachtungsgerät einer industriellen Automatisierungsanordnung vorgesehen ist, wobei Informationen über Zustände der industriellen Automatisierungsanordnung und Bedienelemente zur Beeinflussung von Komponenten der industriellen Automatisierungsanordnung für die Ausgabe auf einer graphischen Benutzeroberfläche zusammengestellt werden. Dabei werden nach der Registrierung eines Ereignisses Informationen über das Ereignis und Angaben über die Identität oder Rolle eines Benutzers des Bedien- und Beobachtungsgerätes zu einer Instanz übermittelt, wonach durch die Instanz in einem ersten Schritt anhand des Ereignisses und spezifisch für die Identität oder Rolle des Benutzers projektierte Informationen über zumindest eine von dem Ereignis betroffene Komponente der industriellen Automatisierungsanordnung aus einer Engineering-Datenbank abgerufen werden, in einem zweiten Schritt von der zumindest einen betroffenen Komponente oder einer anderen Datenquelle aktuelle Zustandsinformationen abgerufen werden, und in einem dritten Schritt die projektierten Informationen und die Zustandsinformationen zur Generierung der Anzeige- und Bedienansicht verwendet werden. Die damit gegebene dynamische, automatisierte Zusammenstellung einer Maschinen- und Anlagenbedienung kann im Produktivbetrieb, der Überwachung und Optimierung sowie im Service-Fall genutzt werden. Dabei werden vorteilhaft die Anzeige- und Bedienbilder ("Screens") ereignisgesteuert aufgebaut und aktiviert. Diese Ereignisse können von einem Bediener am "HMI-Gerät" (Bedien- und Beobachtungsgerät), von der Maschine/Anlage bzw. der darin verbauten Komponenten selbst, aber auch von überlagerten Prozessen (z.B. MES - Manufacturing Execution System, ERP - Enterprise Ressource Planning) ausgelöst werden.

Die Lösung der Aufgabe sieht außerdem einen Server mit einer Instanz zur Generierung einer Anzeige- und Bedienansicht gemäß dem Patentanspruch 9 vor, wobei ein Server zur Generierung einer Anzeige- und Bedienansicht für ein Bedien- und Beobachtungsgerät einer industriellen Automatisierungsanordnung vorgeschlagen wird, wobei der Server zur Bereitstellung und Anordnung von Informationen über Zustände der industriellen Automatisierungsanordnung und von Bedienelementen zur Beeinflussung von Komponenten der industriellen Automatisierungsanordnung für die Ausgabe auf einer graphischen Benutzeroberfläche eingerichtet ist. Dabei ist der Server zum Austausch von Daten und Informationen mit zumindest einer Komponente der industriellen Automatisierungsanordnung, einem Bedien- und Beobachtungsgerät und einer Engineering-Datenbank mit strukturierten Angaben über die Komponenten und deren räumlichen und/oder logischen Beziehungen eingerichtet, wobei der Server zum Empfang von Nachrichten über Informationen über zumindest ein Ereignis und zum Empfang von Angaben über die Identität oder Rolle eines Benutzers des Bedien- und Beobachtungsgerätes eingerichtet ist, wonach der Server zur Ausführung eines ersten Schritts, in dem anhand des Ereignisses und spezifisch für die Identität oder Rolle des Benutzers projektierte Informationen über zumindest eine von dem Ereignis betroffene Komponente der industriellen Automatisierungsanordnung aus der Engineering-Datenbank abgerufen werden, eines zweiten Schritts, in welchem von der zumindest einen betroffenen Komponente oder einer anderen Datenquelle aktuelle Zustandsinformationen abgerufen werden, und eines dritten Schritts, in welchem die projektierten Informationen und die Zustandsinformationen zur Generierung der Anzeige- und Bedienansicht verwendet werden, eingerichtet ist. Durch einen solchen Server mit einer solchen Instanz, die beispielsweise durch eine auf einem beliebigen Datenverarbeitungsgerät (Hardware) ablaufende Software gebildet sein kann und nicht zwingend eine eigene, separate Server-Hardware aufweisen muss, können die im Zusammenhang mit dem Verfahren bereits diskutierten Vorteile realisiert werden.

In den abhängigen Patentansprüchen sind vorteilhafte Ausgestaltungen des erfindungsgemäßen Verfahrens angegeben, die sinngemäß auch für den erfindungsgemäßen Server gelten. Die dabei beschriebenen Merkmale und deren Vorteile können sowohl einzeln, als auch in Kombination miteinander realisiert werden.

Vorteilhaft werden in der Anzeige- und Bedienansicht ("Screen") Symbole für eine Mehrzahl von dem Ereignis betroffener Komponenten und deren logische oder räumliche Beziehung zueinander dargestellt, wobei ein geeigneter Einstiegspunkt die direkt von dem Ereignis betroffene Komponente oder die dem verwendeten HMI-Gerät nächstliegende Komponente sein kann. Dazu können dann eine Anzahl räumlich oder logisch benachbarter Komponenten zur Darstellung vorgesehen werden. Je nach zur Verfügung stehender Darstellungsfläche werden alle relevanten "Nachbarn" oder eben die meist-relevanten Nachbarn dargestellt. Dazu kann ein Benutzer auch eigene Vorgaben in Bezug auf den Grad der gewünschten Detailliertheit und die bevorzugte Art der Darstellung machen.

Bei der Darstellung der räumlichen Beziehungen kann dadurch eine Sicht gebildet werden, die den Benutzer an die tatsächliche Anordnung der Komponenten, Geräte etc. erinnert und damit eine Fehlerbehebung an einer Hardware oder dgl. erleichtert. Durch die Darstellung der logischen Beziehungen ist von Vorteil, dass beispielsweise ein Informationsfluss, Energiefluss, Materialfluss oder funktionelle Abhängigkeiten der Komponenten voneinander visualisiert werden können. In einer besonders vorteilhaften Ausgestaltung kann zwischen der Darstellung logischer und der Darstellung räumlicher Beziehungen umgeschaltet werden. Dabei kann es vorkommen, dass beim Umschalten zwischen logischen und räumlichen Beziehungen zumindest teilweise andere Komponenten jeweils angezeigt werden, weil beispielsweise räumlich benachbarte Komponenten nicht zwangsläufig in einem logischen Zusammenhang mit der betrachteten Komponente, welche beispielsweise das Ereignis ausgelöst hat, stehen müssen, und umgekehrt. Je nach den Informationen, die von einem Engineering-System beigesteuert werden können, kann beispielsweise bezüglich der logischen Sicht entweder ein Datenfluss, einen Materialfluss, ein Energiefluss oder andere Abhängigkeiten betrachtet werden. Bezüglich der Darstellung der räumlichen Bezüge können beispielsweise bei dreidimensionaler Anordnung der Komponenten verschiedene Ebenen oder Schnitte (z-B. Horizontal-Schnitt oder Vertikal-Schnitt) oder dgl. ausgewählt werden. Dabei können die Komponenten vorzugsweise durch zugeordnete Symbole, die gleichzeitig auch Anzeigemittel für Zustände beinhalten können, dargestellt werden. In einer anderen Ausgestaltung können die Komponenten, Geräte etc. auch in einer photorealistischen Sicht dargstellt werden.

Zur Auslösung des dynamischen Aufbaus einer Anzeige- und Bedienansicht können Ereignisse verschiedener Art vorgesehen werden, wobei vorteilhaft auch mehrere unterschiedliche Ereignisse gleichzeitig vorgesehen sein können. In einer besonders vorteilhaften Ausgestaltung können das Auftreten von Ausnahmezuständen, beispielsweise das Über= oder Unterschreiten von Grenzwerten oder das Auftreten von Fehlern dazu verwendet werden, das Zusammenstellen und Ausgeben einer Anzeige- und Bedienseite "triggern". Dabei soll vorteilhaft diejenige Komponente oder derjenige Anlagenteil, an dem das Ereignis aufgetreten ist oder registriert wurde, zwingend mittels einer Anzeige- und Bedienansicht dargestellt werden, wobei je nach Inhalt der danach abgerufenen Informationen der Engineering-Datenbank die z.B. räumlich oder logisch "benachbarten" bzw. in Bezug stehenden Komponenten ebenfalls dargestellt werden. Dadurch, dass jeweils zeitnah auf eine Engineering Datenbank zugegriffen wird, ergibt sich der Vorteil, dass stets auf die aktuellen Projektierungsdaten und somit die Realität am besten widerspiegelnden Daten zugegriffen wird.

Ein anderes, gebräuchliches Ereignis zum Auslösen der Generierung der Anzeige- und Bedienansicht besteht darin, das Bedien- und Beobachtungsgerät zu aktivieren oder an das Datennetzwerk (Automatisierungsnetzwerk) anzuknüpfen. Dabei kann der jeweilige Standort des Bedien- und Beobachtungsgerätes, der sich auch aus einer Bezeichnung oder technischen Information des jeweils genutzten Netzwerkzugangs (LAN-Anschluss, WLAN-Zelle etc.) ergeben kann, zur Auswahl derjenigen Komponente oder Komponenten dienen, die mittels der Anzeige- und Bedienansicht darzustellen ist oder sind. Neben der Identifizierung über den Standort des Netzwerkzugangs kann auch eine absolute geographische Standortbestimmung des Bedien- und Beobachtungsgerätes, beispielsweise mittels eines GPS-Empfängers, oder auch eine relative räumliche Lage zu anderen vorhandenen Komponenten zur Auswahl der darzustellenden Komponenten dienen.

Ein wesentlicher Aspekt einer vorteilhaften Ausgestaltung besteht in einer Benutzer- bzw. Benutzer-Rollenabhängigen Auswahl der darzustellenden Komponenten und die Auswahl der darzustellenden Informationen. Dadurch ist es beispielsweise möglich, einen Experten detailliertere Informationen darzustellen und Bedienelemente anzubieten, die weitgehendere Berechtigungen aufweisen, als einen Bediener, der nur eingeschränkte Informationen und nur eingeschränkte Bedienelemente dargeboten bekommen darf.

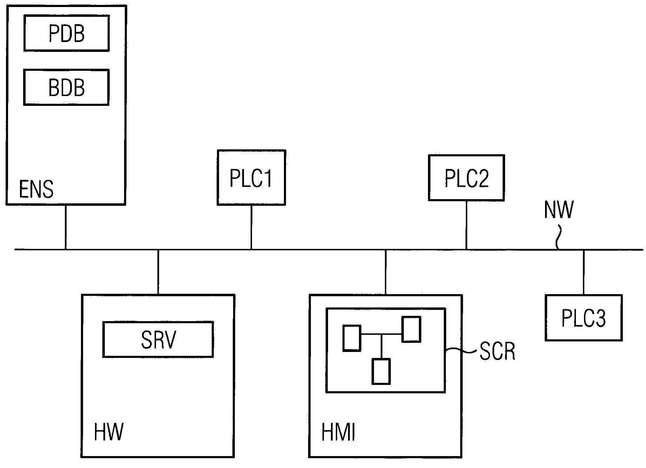

Ein Ausführungsbeispiel für das erfindungsgemäßen Verfahrens wird nachfolgend anhand der Zeichnung erläutert; dies dient gleichzeitig der Erläuterung eines erfindungsgemäßen Servers.

Dabei zeigt die einzige Zeichnung in schematischer Darstellung eine Anordnung aus mehreren Komponenten einer Automatisierungsanordnung, einem erfindungsgemäßen Server und einem Bedien- und Beobachtungsgerät.

In der Figur ist schematisch ein Automatisierungsnetzwerk NW, kurz Netzwerk, dargestellt, welches beispielsweise als Industrial Ethernet ausgebildet ist. An dem Netzwerk sind die Komponenten PLC1, PLC2, PLC3 angeschlossen, welche in diesem Ausführungsbeispiel speicherprogrammierbare Steuerungen sein sollen, die jeweils einen Mikroprozessor, Speicher etc. aufweisen und die mit einer (nicht dargestellten) Peripherie in Form von Sensoren, Aktoren oder dgl. ausgestattet sind. An dem Netzwerk NW ist weiterhin ein Bedien- und Beobachtungsgerät HMI (Human Machine Interface) angeschlossen, welches über eine graphische Benutzeroberfläche verfügt, die zur Darstellung von Zuständen der Automatisierungsanordnung und insbesondere der Komponenten PLC1, ..., PLC3 und der damit gesteuerten oder überwachten Automatisierungsvorgänge und Prozesse dient. Die graphische Benutzeroberfläche weist weiterhin Bedienelemente auf, mit denen Eingaben für die Komponenten PLC1, ..., PLC3 und andere Geräte getätigt werden können. Die Bedienelemente und die Anzeigeelemente werden auf Anzeige- und Bedienansichten SCR ("Screens" oder "Bedienseiten") zusammengefasst, wobei je nach Bedarf und je nach Benutzer und Situation verschieden ausgestaltete Anzeige- und Bedienansichten SCR darstellbar sein sollen.

An dem Netzwerk NW ist weiterhin eine standard-konforme Hardware HW, beispielsweise in Form einer Server-Hardware im Industriestandard, angebunden, wobei auf dieser Server-Hardware HW eine Instanz SRV (fortan auch als "Server" bezeichnet) installiert ist. Außerdem ist an dem Netzwerk NW noch eine weitere Server-Hardware ENS (Engineering-System) angeschlossen, die neben weiteren, nicht dargestellten Funktionsbausteinen eine Projektdatenbank PDB und eine Benutzerdatenbank BDB umfasst. Sowohl die Server-Hardware HW als auch die Server-Hardware ENS können auch in anderen Netzwerken angeordnet sein, die mittels eines Gateways mit dem hier betrachteten Netzwerk NW verbunden sind; insbesondere können die genannten Server-Hardware HW, ENS auch über das Internet oder eine dedizierte Datenverbindung kommunikativ mit dem Netzwerk NW verbunden sein.

Im Folgenden soll der dynamische Aufbau einer Anzeige- und Bedienansicht SCR beschrieben werden, wobei nach einem auslösenden Ereignis die Anzeige- und Bedienansicht SCR durch die Instanz SRV konfiguriert, mittels des Netzwerks NW zu dem Bedien- und Beobachtungsgerät HMI übermittelt und dort auf der graphischen Benutzeroberfläche ausgegeben bzw. angezeigt wird.

Als auslösendes Ereignis soll hier die Aktivierung ("Einschalten", "Starten", ...) des Bedien- und Beobachtungsgerätes HMI innerhalb der industriellen Automatisierungsanordnung gewertet werden, wobei hierbei angenommen werden soll, dass es sich bei dem Bedien- und Beobachtungsgerät HMI um ein drahtlos betriebenes Gerät (WLAN-Gerät) handelt und die industrielle Automatisierungsanordnung aus einer Vielzahl von WLAN-Zellen besteht, die jeweils einem bestimmten Produktionsbereich zugeordnet sind und wobei das jeweils verwendete WLAN-Subnetzwerk (Zelle) einen Rückschluss darüber erlaubt, an welcher Verarbeitungsstation der industriellen Automatisierungsanordnung sich der Benutzer des Bedien- und Beobachtungsgerätes HMI gerade aufhält. In alternativen Ausführungsformen können auch andere Ereignisse zum "Triggern" der Erstellung der Anzeige- und Bedienansicht SCR verwendet werden, insbesondere auch Ausnahmezustände (Fehler, Alarme etc.) an einer der Komponenten PLC1, ..., PLC3.

Im Folgenden wird angenommen, dass ein Benutzer sein Bedien- und Beobachtungsgerät HMI in derjenigen WLAN-Zelle aktiviert, in der auch die Komponente PLC2 angeordnet ist. Zudem sei angenommen, dass es sich bei dem an dem Bedien- und Beobachtungsgerät HMI angemeldeten ("eingeloggten") Benutzer um einen Netzwerkspezialisten handelt; der Benutzer hat sich dazu mit seinem Benutzernamen und einem Kennwort an dem Bedien- und Beobachtungsgerät HMI angemeldet und autorisiert.

Über das (nicht dargestellte) WLAN-Netzwerk, von dem angenommen wird, dass dieses mit dem Netzwerk NW kommunikativ verbunden ist, sendet das Bedien- und Beobachtungsgerät HMI eine Abfragemeldung an die Instanz SRV, wobei die Abfragemeldung (Nachricht) die Benutzerkennung des angemeldeten Benutzers (des Netzwerkspezialisten) und eine Angabe über die WLAN-Zelle, z.B. eine SSID (Service-Set Identifier), umfasst. In der Realität wird eine Abfragemeldung eine Vielzahl weiterer Informationen umfassen; an dieser Stelle werden nur diejenigen Nachrichtenbestandteile besprochen, die für die Funktion des beschriebenen Verfahrens signifikant sind.

Die Instanz SRV bzw. eine darin programmierte Prozedur verarbeitet die Abfragemeldung und ruft dazu weitere Informationen von dem Engineering-System ENS bzw. den darin umfassten Datenbanken, nämlich der Benutzerdatenbank BDB und der Projektdatenbank PDB, ab.

In einem ersten Schritt findet eine Benutzer-Verifikation des angemeldeten Benutzers statt, indem der Benutzername dazu verwendet wird, um aus der Benutzerdatenbank BDB ein Benutzer-Profil abzurufen. Dabei sei angenommen, dass neben einer Vielzahl weiterer Informationen aus der Benutzerdatenbank BDB die Information darüber abgerufen wird, dass der angemeldete Benutzer ein Netzwerkspezialist ist, der zudem die Berechtigung zum Ansehen und zum Ändern von Netzwerkkonfigurationen und Netzwerkparametern aller in dem Netzwerk NW angeordneter Komponenten und Geräte besitzt. Weiter ist in den Benutzerdaten geschlüsselt, dass dieser angemeldete Benutzer für ein Bedien- und Beobachtungsgerät HMI eine sog. "Netzwerksicht" bevorzugt, also eine Sicht, in der die vorhandenen Komponenten PLC1, ..., PLC3, HW, ENS, HMI als einfache Symbole ("Blackboxes") dargestellt werden, sowie die Netzwerkverbindungen dieser Geräte einschließlich der grundlegenden Netzwerkparameter, beispielsweise IP-Adressen und dgl., darzustellen sind.

Nach Auswertung dieser Informationen aus dem Benutzerprofil ruft der Server SRV weitere Daten aus der Projektdatenbank PDB ab. Zunächst wird anhand der Bezeichnung der WLAN-Zelle (SSID), in der sich das Bedien- und Beobachtungsgerät HMI derzeit befindet, festgestellt, wo sich das Bedien- und Beobachtungsgerät HMI derzeit in der industriellen Automatisierungsanordnung befindet. Dazu ist das Areal mit der industriellen Automatisierungsanordnung in räumliche Sektoren ("Cluster") unterteilt, so dass anhand des Sektors, in dem sich die identifizierte WLAN-Zelle befindet, im vorliegenden Ausführungsbeispiel festgestellt werden kann, dass sich die Komponente PLC2 in demselben Sektor befindet. Dies kann beispielsweise festgestellt werden, indem der Server SRV zunächst anhand der Kennung (SSID) der fraglichen WLAN-Zelle den Sektor mit dem Bedien- und Beobachtungsgerät HMI feststellt; dazu sei angenommen, dass die Zuordnung von WLAN-Zellen bzw. deren Bezeichnung (SSID) und den entsprechenden Sektoren in der Projektdatenbank PDB oder alternativ in einer separaten Ortsdatenbank gespeichert ist. Anhand des festgestellten Sektors wird nun aus der Projektdatenbank PDB eine Liste aller Komponenten aus demselben Sektor abgerufen; im vorliegenden, vereinfachten Ausführungsbeispiel ist dies allein die Komponente PLC2.

Zum Aufbau einer Anzeige- und Bedienansicht wird somit die Komponente PLC2 zentral dargestellt, wonach aus der Projektdatenbank PDB bzw. der darin gespeicherten "Netzwerksicht" die Informationen darüber abgerufen werden, welche anderen Komponenten mit der Komponente PLC2 in einem Datenaustausch stehen. Dabei ist zu beachten, dass durch das Netzwerk NW die Komponente PLC2 zwar faktisch in der Lage ist, mit allen weiteren Geräten und Komponenten des Netzwerks NW und, sofern ein geeignetes Gateway vorhanden ist, auch darüber hinaus Daten auszutauschen. Für den angemeldeten Benutzer ist jedoch interessant, zu welchen anderen Komponenten die Komponente PLC2 tatsächlich Daten versenden soll bzw. von welchen anderen Komponenten und Geräten im Produktivbetrieb diese Komponente PLC2 Daten empfangen soll.

Es sei angenommen, dass die Komponente PLC2 die Steuerungseinrichtung für einen Roboterarm darstellt, der von der Komponente PLC1, hier beispielsweise ein Förderer, Daten darüber empfangen soll, wann auf dem Förderer ein mittels des Roboterarms zu manipulierender Gegenstand bereitstellt. Somit ist nicht nur die Komponente PLC2, sondern auch die Komponente PLC1 von dem Ereignis, nämlich dem Aktivieren des Bedien- und Beobachtungsgeräts HMI, betroffen, so dass beide Komponenten PLC1, PLC2 auf der Anzeige- und Bedienansicht SCR darzustellen sind. Darüber hinaus muss auch die logische Datenverbindung zwischen diesen beiden Komponenten PLC1, PLC2 visualisiert werden, wobei auf der Anzeige- und Bedienansicht aufgrund dessen, dass der anfragende Benutzer ein Netzwerkspezialist ist, weiterhin als Zustandsinformationen die aktuellen Kommunikationsparameter, insbesondere IP-Adressen, Netzwerkprotokolle und dgl., angezeigt werden. Diese werden "online" von den Komponenten PLC1, PLC2 abgerufen. Aufgrund seiner ausgedehnten Berechtigung werden dem Benutzer darüber hinaus auch Bedienelemente zur Änderung der Parameter und Netzwerkeinstelllungen angeboten; in einer Ausführungsform können diese Bedienelemente durch einen Befehl des Benutzers ein- oder ausgeblendet werden.

In einem weiteren Schritt werden nun von den darzustellenden Komponenten PLC2, PLC1 weitere Zustandsinformationen abgerufen. Dazu werden aus der Projektdatenbank PDB Informationen über abrufbare Variablen und Parameter der aufgefundenen Komponenten PLC2, PLC1 und Angaben über die Art der Visualisierung dieser Variablen und Parameter abgerufen. Anhand dieser Informationen ruft der Server SRV, also die verarbeitende Instanz die entsprechenden Werte aus den Komponenten PLC2, PLC1 ab und visualisiert diese in direkter Nachbarschaft oder auf den Symbolen für die zugehörigen Komponenten PLC2, PLC1. So kann beispielsweise für die hier dargestellte "Netzwerksicht" jede aktive, betriebsbereite Netzwerkschnittstelle durch einen grünen Punkt oder ähnliches dargestellt werden, wogegen gestörte Netzwerkanschlüsse durch ein rotes Symbol oder dgl. visualisiert werden. In einer physikalischen Sicht kann beispielsweise eine prozentuale Auslastung oder eine Betriebstemperatur oder ein anderer Parameter dargestellt werden. Sofern einem Anwender in seinem Benutzerprofil mehrere Rollen zugewiesen sind, weil er beispielsweise zugleich Netzwerkspezialist und Mechatroniker ist, kann in einer Ausgestaltung dem entsprechenden Anwender eine Auswahlmöglichkeit angeboten werden, gemäß der er zwischen einer Netzwerkansicht, einer physikalisch-technischen Ansicht, einer kaufmännischen Ansicht (beispielsweise mit Komponenten-bezogenen Produktionsstatistiken und dgl.) wählen kann.

Es ist darüber hinaus auch möglich, dass Zustandsinformationen über eine Komponente PLC1, ..., PLC3 auch oder nur von einem externen Gerät, beispielsweise einem Statistik-Server, abgerufen werden; dies ist dann bezogen auf die betroffene Komponente in der Projektdatenbank entsprechend administriert.

Sofern es sich bei dem Benutzer um einen anderen Spezialisten gehandelt hätte, beispielsweise einen Mechatroniker, wären die betroffenen Komponenten anders dargestellt worden, nämlich in einer "physischen" Sicht, also im Beispiel des Roboters eine Einheit mit mehreren Motoren, Drehwinkelsensoren und dgl. Als "benachbarte", also ebenso betroffene und damit darzustellende Komponente wäre möglicher Weise nicht der Förderer, der durch die Komponente PLC1 gesteuert wird, dargestellt worden, sondern möglicher Weise alternativ oder zusätzlich die Komponente PLC3, die beispielsweise eine Bearbeitungsstation, in die der Roboterarm (Komponente PLC2) ein Werkstück einfügen muss, sein kann. Entsprechend wären in einem solchen Fall keine Bedienelemente zur Beeinflussung von Netzwerkadressen und dgl. angezeigt worden, sondern andere Bedienelemente zur Konfigurierung der Bewegungsgeschwindigkeit des Roboterarms oder ähnliches.

Die damit mögliche dynamische, automatisierte Zusammenstellung einer Maschinen- und Anlagenbedienung kann somit sowohl im Produktivbetrieb (Überwachung und Optimierung), als auch im Servicefall genutzt werden. Dabei werden die Anzeige- und Bedienansichten SCR Ereignis-gesteuert aufgebaut und aktiviert. Diese Ereignisse können von einem Bediener am Bedien- und Beobachtungsgerät HMI, von der Maschine/Anlage bzw. von den darin angeordneten Komponenten PLC1, ..., PLC3 selbst oder aber auch von überlagerten Prozessen (hier nicht dargestellt) ausgelöst werden. Tritt beispielsweise eine Störung in der Automatisierungsanordnung und damit in einer der genannten Komponenten auf, so bekommt die Instanz SRV bzw. eine darin programmierte Prozedur dieses Störereignisses mit entsprechenden Merkmalen gemeldet. Die in der Instanz SRV umfasste Prozedur prüft dann beispielsweise anhand verfügbarer Benutzerprofile die Mitarbeiterverfügbarkeit und kann damit auch einen passenden Spezialisten alarmieren. Gleichzeitig werden die notwendigen Inhalte, wie z.B. Bedienungsanleitung, Videoanweisung zur Entstörung, Prozessbilder, Netzwerkansichten etc. dynamisch zusammengestellt.

Dadurch werden die passenden Informationen für die Visualisierung zur Entstörung an das Bedien- und Beobachtungsgerät HMI und damit an den entsprechenden Bediener transferiert. Es ist beispielsweise auch möglich, im Fall einer sinkenden Produktqualität, die von entsprechenden Sensoren und Messwerkzeugen festgestellt wird, nach Anforderung durch einen Anlagenbediener vor Ort ein Prozessüberwachungs- und Optimierungsereignis auszulösen. Das Anzeige- und Bedienkonzept stellt dann dynamisch, orts- und situationsabhängig sowie zugeschnitten auf die Qualifikation und Berechtigung des Anlagenbedieners Bilder ("Screens") mit relevanten Maschineneinstellungen, Materialparametern, Prozess-Eingriffsmöglichkeiten, KPI's (Key-Performance Indizes) zur Verfügung.

Durch die geschilderte automatische und dynamische Zusammenstellung und Generierung der Visualisierung ("Anzeige- und Bedienansichten") für Bedien- und Beobachtungsgeräte HMI reduziert sich der Engineering-Aufwand drastisch, da bei zwischenzeitlichen Änderungen an einem Projekt bzw. an der Automatisierungseinrichtung keine Modifikationen an einzelnen "HMI-Projekten" mehr bearbeitet bzw. eingefügt werden müssen. Durch die Anbindung des Servers mit der Instanz SRV, die die Anzeige- und Bedienansichten SCR konfiguriert, an eine zentrale Engineering Datenbank ist sichergestellt, dass stets aktuelle Daten konsistent für die Visualisierung verwendet werden. Die durch das Konzept mögliche benutzerorientierte Visualisierung erhöht die Bedienbarkeit und reduziert die Wahrscheinlichkeit von Bedienfehlern. In einer vorteilhaften Ausgestaltung ist es darüber hinaus möglich, dreidimensionale Objekte fallbezogen in die Visualisierung zu integrieren und damit die Intuitivität der Bedienung weiter zu erhöhen.

## Patentansprüche

1. Verfahren zur Generierung einer Anzeige- und Bedienansicht (SCR) für ein Bedien- und Beobachtungsgerät (HMI) einer industriellen Automatisierungsanördnung,
wobei Informationen über Zustände der industriellen Automatisierungsanordnung und Bedienelemente zur Beeinflussung von Komponenten (PLC1, ..., PLC3) der industriellen Automatisierungsanordnung für die Ausgabe auf einer graphischen Benutzeroberfläche zusammengestellt werden, **dadurch gekennzeichnet,**
**dass** nach der Registrierung eines Ereignisses Informationen über das Ereignis und Angaben über die Identität oder Rolle eines Benutzers des Bedien- und Beobachtungsgerätes (HMI) zu einer Instanz (SRV) übermittelt werden, wonach durch die Instanz (SRV)
- in einem ersten Schritt anhand des Ereignisses und spezifisch für die Identität oder Rolle des Benutzers projektierte Informationen über zumindest eine von dem Ereignis betroffene Komponente (PLC1, ..., PLC3) der industriellen Automatisierungsanordnung aus einer Engineering-Datenbank (PDB) abgerufen werden,
- in einem zweiten Schritt von der oder über die zumindest eine betroffene Komponente (PLC1, ..., PLC3) aktuelle Zustandsinformationen abgerufen werden, und
- in einem dritten Schritt die projektierten Informationen und die Zustandsinformationen zur Generierung der Anzeige- und Bedienansicht (SCR) verwendet werden,
**dass** in der Anzeige- und Bedienansicht (SCR) Symbole für eine Mehrzahl von dem Ereignis betroffener Komponenten (PLC1, ..., PLC3) und deren logische oder räumliche Beziehung zueinander dargestellt werden,
wobei als das Ereignis das Auftreten eines Ausnahmezustandes in zumindest einet der Komponenten (PLC1, ..., PLC3) der industriellen Automatisierungsanordnung verwendet wird.

2. Verfahren nach Patentanspruch 1,
**dadurch gekennzeichnet,**
**dass** der Ausnahmezustand im Zuge der Überwachung zumindest eines Parameters einer Komponente (PLC1, ..., PLC3) der industriellen Autömatisierungsanordnung detektiert wird,
wobei bei Auftreten des Ausnahmezustandes eine Meldung an die Instanz (SRV) gesendet wird, wobei die Meldung eine Angabe zur Identifizierung der betreffenden Komponente (PLC1, ..., PLC3) und eine Information über eine Bezeichnung und einen Wert des betreffenden Parameters umfasst.

3. Verfahren nach Patentanspruch 2,
**dadurch gekennzeichnet,**
**dass** als der Ausnahmezustand das Auftreten einer Fehlfunktion oder das Abweichen eines Messwertes von einem Sollwert gewertet wird.

4. Verfahren nach einem der vorhergehenden Patentansprüche,
**dadurch gekennzeichnet,**
**dass** als das Ereignis die Eingabe eines Abfragebefehls an dem Bedien- und Beobachtungsgerät (HMI) oder das Aktivieren des Bedien- und Beobachtungsgerätes (HMI) gewertet wird.

5. Verfahren nach einem der vorhergehenden Patentansprüche,
**dadurch gekennzeichnet,**
**dass** als die Informationen über das Ereignis ein absoluter Standort des Bedien- und Beobachtungsgerätes (HMI) oder ein relativer Standort des Bedien- und Beobachtungsgerätes (HMI) in Bezug auf zumindest eine Komponente (PLC1, ..., PLC3) der industriellen Automatisierungsanordnung, oder eine Bezeichnung eines Zugangs zu einem Datennetzwerk (NW), an dem das Bedien- und Beobachtungsgerät (HMI) angeknüpft ist oder wird, verwendet wird.

6. Verfahren nach einem der vorhergehenden Patentansprüche,
**dadurch gekennzeichnet,**
**dass** als die von dem Ereignis betroffenen Komponenten (PLC1, ..., PLC3) diejenige Komponente (PLC1, ..., PLC3), an der oder in deren räumlicher oder logischer Nähe das Ereignis auftritt, und zumindest eine weitere Komponente (PLC1, ..., PLC3), die mit der ersten Komponente (PLC1, ..., PLC3) gemäß der projektierten Informationen in einem räumlichen oder logischen oder sachlichen Bezug steht, verwendet werden.

7. Server zur Generierung einer Anzeige- und Bedienansicht (SCR)für ein Bedien- und Beobachtungsgerät (HMI) einer industriellen Automatisierungsanordnung,
wobei der Server eine Instanz (SRV) zur Bereitstellung und Anordnung von Informationen über Zustände der industriellen Automatisierungsanordnung und von Bedienelementen zur Beeinflussung von Komponenten (PLC1, ..., PLC3) der industriellen Automatisierungsanordnung für die Ausgabe auf einer graphischen Benutzeroberfläche eingerichtet umfasst, **dadurch gekennzeichnet,**
**dass** der Server zum Austausch von Daten und Informationen mit zumindest einer Komponente der industriellen Automatisierungsanordnung, einem Bedien- und Beobachtungsgerät (HMI) und einer Engineering-Datenbank (PDB) mit strukturierten Angaben über die Komponenten (PLC1, ..., PLC3) und deren räumlichen und/oder logischen Beziehungen eingerichtet ist,
wobei der Server zum Empfang von Nachrichten über Informationen über zumindest ein Ereignis und zum Empfang über Angaben über die Identität oder Rolle eines Benutzers des Bedien- und Beobachtungsgerätes (HMI) eingerichtet ist, wonach der Server zur Ausführung
- eines ersten Schritts, in dem anhand des Ereignisses und spezifisch für die Identität oder Rolle des Benutzers projektierte Informationen über zumindest eine von dem Ereignis betroffene Komponente (PLC1, ..., PLC3) der industriellen Automatisierungsanordnung aus der Engineering-Datenbank (PDB) abgerufen werden,
- eines zweiten Schritts, in welchem von der zumindest einen betroffenen Komponente (PLC1, ..., PLC3) aktuelle Zustandsinformationen abgerufen werden, und
- eines dritten Schritts, in welchem die projektierten Informationen und die Zustandsinformationen zur Generierung der Anzeige- und Bedienansicht (SCR) verwendet werden,
eingerichtet ist,
**dass** in der Anzeige- und Bedienansicht (SCR) die Darstellung von Symbolen für eine Mehrzahl von dem Ereignis betroffener Komponenten (PLC1, ..., PLC3) und deren logische oder räumliche Beziehung zueinander vorgesehen ist,
wobei das Ereignis das Auftreten eines Ausnahmezustandes in zumindest einer der Komponenten (PLC1, ..., PLC3) der industriellen Automatisierungsanordnung ist.

## Claims

1. Method for generating a display and operating view (SCR) for an operating and monitoring device (HMI) of an industrial automation arrangement,
information relating to states of the industrial automation arrangement and operating elements for influencing components (PLC1, ..., PLC3) of the industrial automation arrangement being compiled for output on a graphical user interface, **characterized**
**in that** after an event has been logged, information relating to the event and details of the identity or role of a user of the operating and monitoring device (HMI) are transmitted to an entity (SRV), after which the entity (SRV),
- in a first step, retrieves planned information relating to at least one component (PLC1, ..., PLC3) of the industrial automation arrangement affected by the event from an engineering database (PDB) using the event and specifically for the identity or role of the user,
- in a second step, retrieves current state information from or via the at least one affected component (PLC1, ..., PLC3), and,
- in a third step, uses the planned information and the state information to generate the display and operating view (SCR),
**in that** symbols for a plurality of components (PLC1, ..., PLC3) affected by the event and their logical or spatial relationship with respect to one another are displayed in the display and operating view (SCR), wherein the occurrence of an exception state in at least one of the components (PLC1, ..., PLC3) of the industrial automation arrangement is used as the event.

2. Method according to Patent Claim 1,
**characterized in that**
the exception state is detected when monitoring at least one parameter of a component (PLC1, ..., PLC3) of the industrial automation arrangement, a message being sent to the entity (SRV) upon the occurrence of the exception state, the message comprising a detail for identifying the relevant component (PLC1, ..., PLC3) and an item of information relating to a designation and a value of the relevant parameter.

3. Method according to Patent Claim 2,
**characterized in that**
the occurrence of a malfunction or the deviation of a measured value from a desired value is deemed to be the exception state.

4. Method according to one of the preceding patent claims,
**characterized in that**
the input of a query command on the operating and monitoring device (HMI) or the activation of the operating and monitoring device (HMI) is deemed to be the event.

5. Method according to one of the preceding patent claims,
**characterized in that**
an absolute location of the operating and monitoring device (HMI) or a location of the operating and monitoring device (HMI) relative to at least one component (PLC1, ..., PLC3) of the industrial automation arrangement or a designation of an access to a data network (NW), to which the operating and monitoring device (HMI) is or has been linked, is used as the information relating to the event.

6. Method according to one of the preceding patent claims,
**characterized in that**
that component (PLC1, ..., PLC3) at which or in the spatial or logical vicinity of which the event occurs, and at least one further component (PLC1, ..., PLC3), which is spatially or logically or factually related to the first component (PLC1, ..., PLC3) according to the planned information, are used as the components (PLC1, ..., PLC3) affected by the event.

7. Server for generating a display and operating view (SCR) for an operating and monitoring device (HMI) of an industrial automation arrangement,
the server comprising an entity (SRV) set up to provide and arrange information relating to states of the industrial automation arrangement and to provide and arrange operating elements for influencing components (PLC1, ..., PLC3) of the industrial automation arrangement for output on a graphical user interface,
**characterized**
**in that** the server is set up to interchange data and information with at least one component of the industrial automation arrangement, an operating and monitoring device (HMI) and an engineering database (PDB) with structured details of the components (PLC1, ..., PLC3) and their spatial and/or logical relationships,
the server being set up to receive messages with information relating to at least one event and to receive details of the identity or role of a user of the operating and monitoring device (HMI), after which the server is set up to carry out
- a first step in which planned information relating to at least one component (PLC1, ..., PLC3) of the industrial automation arrangement affected by the event is retrieved from the engineering database (PDB) using the event and specifically for the identity or role of the user,
- a second step in which current state information is retrieved from the at least one affected component (PLC1, ..., PLC3), and
- a third step in which the planned information and the state information is used to generate the display and operating view (SCR),
**in that** the display of symbols for a plurality of components (PLC1, ..., PLC3) affected by the event and their logical or spatial relationship with respect to one another is provided in the display and operating view (SCR),
wherein the event is the occurrence of an exception state in at least one of the components (PLC1, ..., PLC3) of the industrial automation arrangement.

## Revendications

1. Procédé de création d'une projection d'affichage et de commande (SCR) pour un appareil (HMI) de commande et d'observation d'un agencement d'automatisation industriel,
dans lequel des informations sur des états de l'agencement d'automatisation industriel et des éléments de commande pour influencer des composants (PLC1, ...., PLC3) d'agencement d'automatisation industriel sont rassemblées pour l'émission sur une surface graphique d'utilisateur,
**caractérisé**
**en ce qu'**après l'enregistrement d'un événement, on transmet des informations sur l'événement et des indications sur l'identité ou le rôle d'un utilisateur de l'appareil ( HMI ) de commande et d'observation à une instance ( SRV ), dans lequel ensuite, par l'instance ( SRV )
- dans un premier stade, on appelle dans une base ( PDB ) de données d'ingénierie, au moyen de l'événement, et spécifiquement pour l'identité ou pour le rôle de l'utilisateur, des informations projetées sur au moins un composant (PLC1, ...., PLC3) concerné par l'événement de l'agencement d'automatisation industriel,
- dans un deuxième stade, on appelle des informations d'état présentes par le au moins un composant ( PLC1, ..., PLC3 ) concerné ou par son intermédiaire et
- dans un troisième stade, on utilise les informations projetées et les informations d'état pour créer la projection d'affichage et de commande ( SCR ),
**en ce que** l'on représente dans la projection d'affichage et de commande ( SCR ) des symboles pour une multiplicité de composants (PLC1, ..., PLC3) concernés par l'événement et leurs relations logiques ou spatiales entre eux,
dans lequel on utilise comme événement l'apparition d'un état d'exception dans au moins l'un des composants (PLC1, ..., PLC3) de l'agencement d'automatisation industriel.

2. Procédé suivant la revendication 1,
**caractérisé en ce que**
l'on détecte l'état d'exception au cours du contrôle d'au moins un paramètre d'un composant (PLC1, ...., PLC3) de l'agencement d'automatisation industriel, dans lequel, à l'apparition de l'état de l'exception, on envoie un message à l'instance ( SRV ), le message comprenant une indication pour identifier le composant (PLC1, ...., PLC3) concerné et une information sur une désignation et une valeur du paramètre concerné.

3. Procédé suivant la revendication 2,
**caractérisé en ce que**
l'on considère comme état d'exception l'apparition d'un fonctionnement défectueux ou l'écart d'une valeur de mesure à une valeur de consigne.

4. Procédé suivant l'une des revendications précédentes,
**caractérisé en ce que**
l'on considère comme l'événement l'entrée d'une instruction de demande à l'appareil (HMI) de commande et d'observation ou l'activation de l'appareil (HMI) de commande et d'observation.

5. Procédé suivant l'une des revendications précédentes,
**caractérisé en ce que**
l'on utilise comme informations sur l'événement un emplacement absolue de l'appareil ( HMI ) de commande et d'observation ou un emplacement relatif de l'appareil (HMI) de commande et d'observation par rapport à au moins un composant ( PLC1, ..., PLC3) de l'agencement d'automatisation industriel ou une désignation d'un accès à un réseau ( NW ) de données, auquel l'appareil (HMI) de commande et d'observation est rattaché ou le sera.

6. Procédé suivant l'une des revendications précédentes,
**caractérisé en ce que**
l'on utilise comme composant ( PLC1, ...., PLC3) concerné par l'événement les composants ( PLC1, .... , PLC3 ), sur lesquels ou dans la proximité spatiale ou logique desquels l'événement apparaît et au moins un autre composant ( PLC1, ...., PLC3 ), qui est en relation spatiale ou logique ou matérielle avec le premier composant ( PLC1, ...., PLC3 ) suivant les informations projetées.

7. Serveur de création d'une projection d'affichage et de commande (SCR) pour un appareil ( HMI ) de commande et de d'observation d'un agencement d'automatisation industriel,
dans lequel le serveur comprend, conçue pour l'émission sur une surface graphique d'utilisateur, une instance ( SRV ) de mise à disposition et d'agencement d'informations sur des états de l'agencement d'automatisation industriel et d'éléments de commande influençant des composants ( PLC1, ...., PLC3) de l'agencement d'automatisation industriel,
**caractérisé**
**en ce que** le serveur est conçu pour échanger des données et des informations avec au moins un composant de l'agencement d'automatisation industriel, avec un appareil (HMI) de commande et d'observation et avec une base ( PDB ) de données d'ingénierie ayant des indications structurées sur les composants (PLC1, ...., PLC3) et leurs relations spatiales et/ou logiques,
dans lequel le serveur est conçu pour la réception de messages par des informations sur au moins un événement et pour la réception par des indications sur l'identité ou le rôle d'un utilisateur de l'appareil (HMI) de commande et d'observation, le serveur étant conçu pour l'exécution,
- d'un premier stade dans lequel, à l'aide de l'événement et spécifiquement pour l'identité et le rôle de l'utilisateur, on appelle dans la base ( PDB ) de données d'ingénierie des informations projetées sur au moins un composant ( PLC1, ...., PLC3 ), concerné par l'événement, de l'agencement d'automatisation industriel,
- un deuxième stade dans lequel on appelle des informations d'état présentes sur le au moins un composant ( PLC1, ...., PLC3 ) concerné et
- un troisième stade dans lequel on utilise les informations projetées et les informations d'état pour créer la projection d'affichage et de commande ( SCR ),
**en ce que** dans la projection d'affichage et de commande ( SCR ), il est prévu la représentation de symboles pour un multiplicité de composants (PLC1, ...., PLC3) concernés par l'événement et leurs relations logiques ou spatiales entre eux,
l'événement étant l'apparition d'un état d'exception dans au moins l'un des composants ( PLC1, ...., PLC3) de l'agencement d'automatisation industriel.
